# EUROPEAN PATENT APPLICATION

(11) **EP 3 299 913 A1**
(43) Date of publication of application: **28.03.2018**
(21) Application number: 17192167.9
(22) Date of filing: 20.09.2017
(51) Int. Cl.: G05B 19/042, G05B 23/02

(54) **PARALLEL PROCESSING FOR MONITORING AND CONTROL OF PLANT EQUIPMENT**

(30) Priority: 22.09.2016 US 201615272585
(71) Applicant: General Electric Company, Schenectady, NY 12345 (US)
(72) Inventor: UNNIKRISHNAN, Sunil, 500081 Hyderabad, Andhra Pradesh (IN); MCKINLEY, Marc Harold, Salem, VA 24153 (US); UDUPA, Chetan Sooryanarayan, 500081 Hyderabad, Andhra Pradesh (IN); JANSSEN, Timothy Lee, Schenectady, NY 12345 (US)
(74) Representative: Fischer, Michael Maria

(57) **Abstract**

A device (330, 380) may receive operating information obtained by one or more sensors (320) associated with plant equipment (310). The operating information may identify one or more operating parameters associated with operation of the plant equipment (310). The device (330, 380) may identify one or more portions of the operating information to be provided for parallel processing. The device (330, 380) may provide the one or more portions of the operating information for parallel processing, and may determine one or more results associated with parallel processing of the one or more portions of the operation information. The device (330, 380) may provide the one or more results for display or to control operation of the plant equipment (310) concurrently with operation of the plant equipment (310).

## Description

### BACKGROUND

Industrial plants, such as power plants or manufacturing plants, may include a variety of plant equipment, such as turbines, generators, boilers, furnaces, ventilation systems, heat rejection systems, reservoirs, reactors, robotic equipment, valves, or the like. Plant equipment may be used to support plant operations and may be controlled by automated controllers. Industrial plants may also include sensors to monitor the conditions of the plant and/or the conditions of the plant equipment.

### SUMMARY

According to some possible implementations, a method may include receiving, by a controller and from one or more sensors associated with equipment used in a plant, operating information associated with operation of the equipment. The method may include providing, by the controller, the operating information to one or more devices for parallel processing of the operating information during operation of the equipment. The method may include receiving, by the controller, one or more results associated with parallel processing of the operating information. The method may include using, by the controller, the one or more results to provide information, associated with operation of the plant, for display or to control operation of the equipment.

According to some possible implementations, a system may include one or more processors. The one or more processors may receive operating information obtained by one or more sensors associated with plant equipment. The operating information may identify one or more operating parameters associated with operation of the plant equipment. The one or more processors may identify one or more portions of the operating information to be provided for parallel processing. The one or more processors may provide the one or more portions of the operating information for parallel processing. The one or more processors may determine one or more results associated with parallel processing of the one or more portions of the operation information. The one or more processors may provide the one or more results for display or to control operation of the plant equipment concurrently with operation of the plant equipment.

According to some possible implementations, a non-transitory computer-readable medium may store one or more instructions that, when executed by one or more processors, cause the one or more processors to receive, from a controller configured to control equipment in a plant, operating information obtained via one or more sensors that monitor the equipment in the plant. The operating information may be obtained via the one or more sensors and during operation of the equipment. The one or more instructions may cause the one or more processors to identify one or more portions of the operating information to be provided for parallel processing, and to provide the one or more portions of the operating information for parallel processing. The one or more instructions may cause the one or more processors to determine one or more results associated with an analysis of the operating information based on providing the one or more portions of the operating information for parallel processing, and to provide the one or more results for display or to control operation of the equipment.

### BRIEF DESCRIPTION OF THE DRAWINGS

Figs. 1 and 2 are diagrams of an overview of an example implementation described herein;
Fig. 3 is a diagram of an example environment in which systems and/or methods, described herein, may be implemented;
Fig. 4 is a diagram of example components of one or more devices of Fig. 3; and
Fig. 5 is a flow chart of an example process for parallel processing of operating information for real time monitoring and control of plant equipment.

### DETAILED DESCRIPTION

The following detailed description of example implementations refers to the accompanying drawings. The same reference numbers in different drawings may identify the same or similar elements.

Operating information (e.g., temperature, pressure, and/or other sensor-related data) associated with plant equipment may be analyzed and/or processed to monitor a condition of the plant equipment and/or to adjust the operation of the plant equipment. Performing complex analysis techniques, such as modeling, calculations, and/or another analysis of operating information, may be compute-intensive and/or time consuming. Thus, the results of the analyses may not be readily available and may not be usable in real time to monitor and/or control operation of the plant equipment.

Implementations described herein may utilize parallel processing techniques (e.g., within a cloud-based analytics system) to perform complex analysis of operating information in order to monitor and/or control operation of plant equipment in real time. For example, implementations described herein may distribute operating information across computing resources in a cloud computing environment. The computing resources may analyze the operating information in parallel such that results of the analysis are produced faster in relation to when the operating information is analyzed serially or manually. Further, the results may be generated in a synchronized manner. As described herein, the results of the analysis may be used to monitor and/or control operation of plant equipment in real time, leading to faster discovery of operating issues, improved performance, and the like. As an example, the results of the analysis may identify a trend in the operating temperature of plant equipment. The trend may be used to modify the operation of the plant equipment so as to not exceed safety specifications.

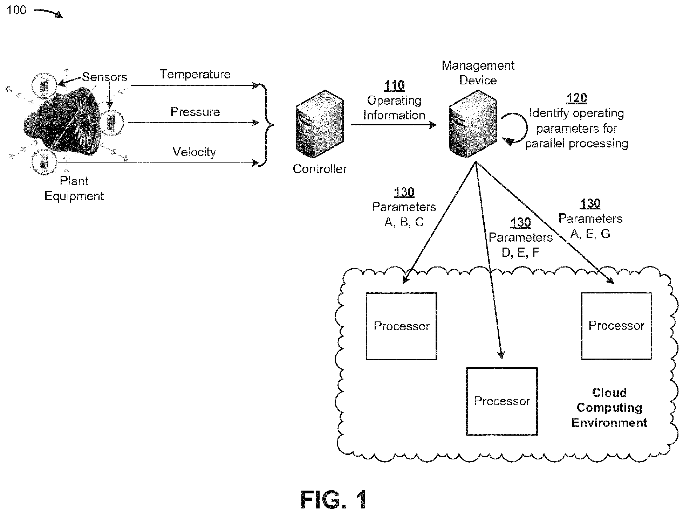

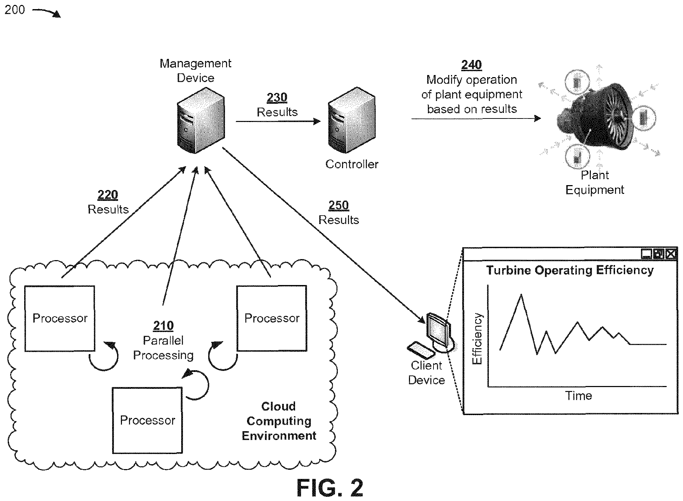

Figs. 1 and 2 are diagrams of an overview of an example implementation 100/200 described herein. As shown in Fig. 1, sensors may monitor operating information associated with plant equipment (e.g., a turbine). For example, the sensors may monitor temperature, pressure, and/or velocity associated with the turbine. A controller may receive the operating information from the sensors, and may provide the operating information to a management device, as shown by reference number 110. As shown by reference number 120, the management device may identify sets of operating parameters, included in the operating information, to be provided for parallel processing (e.g., to be distributed across multiple processors implemented in a cloud computing environment). In some implementations, the operating parameters may include a subset or a portion of the operating information gathered by the sensors.

As shown by reference number 130, the management device may provide different sets of operating parameters to different processors for parallel processing. For example, the management device may provide the operating parameters for parallel processing in a way such that processing of the operating parameters may be completed in a relatively short amount of time (e.g., as compared to serial processing or as compared to providing other sets of operating parameters). Also, the management device may provide the operating parameters in a way such that parallel processing of the operating parameters may be completed in a relatively synchronized manner.

As shown in Fig. 2, and by reference number 210, the processors in the cloud computing environment may each process respective sets of operating parameters in parallel. For example, the processors may execute simulations, may process the operating parameters using one or more analysis techniques, such as by applying one or more models (e.g., predictive models) and/or performing other calculations or analyses based on the operating parameters. As an example, the processors may determine a predicted value of an operating parameter (e.g., based on a trend in operating efficiency of the plant equipment). As shown by reference number 220, the processors may provide the results of the analysis to the management device.

As shown by reference number 230, the management device may provide the results to a controller. The controller may use the results to modify the operation of the plant equipment, as shown by reference number 240. For example, the controller may provide instructions to one or more actuators and/or components of the plant equipment, such as to control an operating speed or another operating parameter. This may improve the efficiency of operating the plant turbine. As shown by reference number 250, the management device may output the results to a client device, and the client device may display the results to aid a plant operator in analyzing the operation of the plant equipment. For example, the results may be displayed in a graph, a chart, or another format.

As described above, processing of operating parameters of plant equipment may be performed in parallel. In this way, the results of the analysis are produced faster in relation to when the operating parameters are analyzed serially or manually. Further, the results may be generated in a synchronized manner. As described herein, the results of the analysis may be used to monitor and/or control operation of plant equipment in real time, leading to faster discovery of operating issues, improved performance, etc.

As indicated above, Figs. 1 and 2 are provided merely as an example. Other examples are possible and may differ from what was described with regard to Figs. 1 and 2.

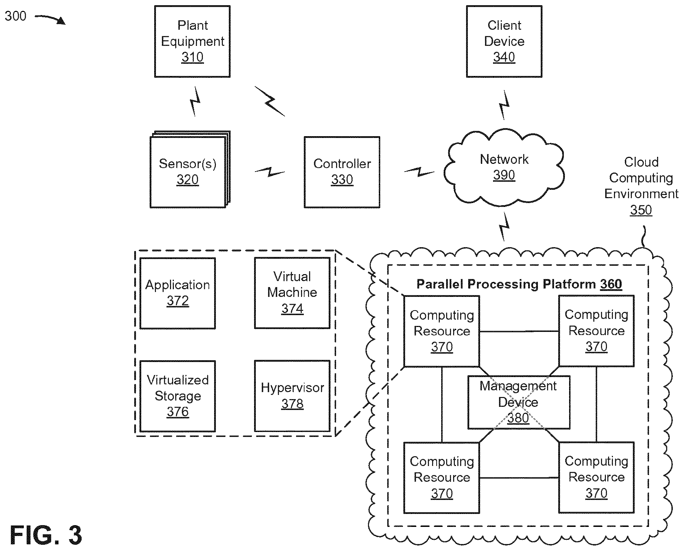

Fig. 3 is a diagram of an example environment 300 in which systems and/or methods, described herein, may be implemented. As shown in Fig. 3, environment 300 may include plant equipment 310, a set of sensors 320, a controller 330, a client device 340, a cloud computing environment 350, a parallel processing platform 360, a set of computing resources 370, a management device 380, and a network 390. Devices of environment 300 may interconnect via wired connections, wireless connections, or a combination of wired and wireless connections. In some implementations, devices of environment 300 may communicate using one or more industry standard protocols, such as the Open Platform Communications (OPC) protocol, the OPC Unified Architecture (OPC UA) protocol, or the like.

Plant equipment 310 includes equipment used in association with operating a plant (e.g., a power plant, a manufacturing plant, etc.). For example, plant equipment 310 may include a turbine, a generator, a boiler, a furnace, a ventilation system, a heat rejection system, a reservoir, a reactor, robotic equipment, a valve, a gas system, a steam system, a heating, ventilating, and air conditioning (HVAC) system, or similar equipment. In some implementations, plant equipment 310 may include one or more actuators capable of receiving instructions (e.g., from controller 330) to control operation of plant equipment 310.

Sensor 320 includes one or more devices capable of measuring or sensing operating information associated with plant equipment 310. For example, sensor 320 may include a position sensor, a velocity or speed sensor, an acceleration sensor, a pressure sensor, a temperature sensor, an object sensor, a weight sensor, a force sensor, a magnetic sensor, a fluid flow sensor, a power sensor, an electrical sensor, a voltage sensor, a resistance sensor, an operating status sensor, or the like. Sensor 320 may provide operating information, associated with plant equipment 310, to controller 330. In some implementations, sensor 320 may be integrated with (e.g., internal to) plant equipment 310. In some implementations, sensor 320 may be separate from (e.g., external to) plant equipment 310.

Controller 330 includes one or more devices capable of controlling operation of plant equipment 310. For example, controller 330 may include a computing device, such as an industrial controller, a server, a desktop computer, a laptop computer, or a similar type of device. In some implementations, controller 330 may provide instructions to one or more actuators of plant equipment 310 to control operation of plant equipment 310. In some implementations, controller 330 may provide instructions directly to plant equipment 310 to control operation of plant equipment 310. Controller 330 may receive analysis results from management device 380, and may control the operation of plant equipment 310 based on the results. In some implementations, controller 330 may be connected to and/or may communicate with cloud computing environment 350 (e.g., one or more of parallel processing platform 360, computing resource(s), and/or management device 380) via a dedicated communication link.

Client device 340 includes one or more devices capable of receiving, generating, storing, processing, and/or providing information associated with operation of plant equipment 310. For example, client device 340 may include a computing device, such as a desktop computer, a laptop computer, a tablet computer, a mobile phone (e.g., a smart phone, a radiotelephone, etc.), or a similar type of device. Client device 340 may provide operating information for display and/or may receive user input to be provided to controller 330 to control operation of plant equipment 310.

Cloud computing environment 350 includes an environment that hosts parallel processing platform 360. Cloud computing environment 350 may provide computation, software, data access, storage, or other services that do not require end-user (e.g., client device 340) knowledge of a physical location and configuration of systems and/or devices that host parallel processing platform 360. As shown, cloud computing environment 350 may include a group of computing resources 370 (referred to collectively as "computing resources 370," and individually as "computing resource 370"). In some implementations, cloud computing environment 350 may host a digital plant model (e.g., a model of a plant) by receiving operating parameters associated with multiple pieces of plant equipment 310 to simulate operation of a plant.

Parallel processing platform 360 includes one or more devices capable of obtaining operating information to be processed, analyzing the operating information (e.g., by applying one or more analysis techniques, such as an algorithm, a model, or the like), and providing results of the analysis to control operation of plant equipment 310, as described in more detail elsewhere herein. For example, parallel processing platform 360 may include a cloud server or a group of cloud servers. In some implementations, parallel processing platform 360 may be designed to be modular such that certain software components can be swapped in or out depending on a particular need. As such, parallel processing platform 360 may be easily and/or quickly reconfigured for different uses.

Computing resource 370 includes one or more computing devices, such as one or more server devices, capable of operating within cloud computing environment 350. In some implementations, one or more computing resources 370 may host parallel processing platform 360. Cloud computing environment 350 may include one or more compute instances executing in computing resource 370, one or more storage devices provided in computing resource 370, one or more data transfer devices provided by computing resource 370, or the like. In some implementations, computing resource 370 may communicate with other computing resources 370 via wired connections, wireless connections, or a combination of wired and wireless connections. As shown, computing resource 370 may include one or more cloud resources, such as one or more applications 372, one or more virtual machines 374, virtualized storage 376, one or more hypervisors 378, or the like.

Application 372 includes one or more software applications that may be provided to or accessed by controller 330 and/or client device 340. Application 372 may eliminate a need to install and execute the software applications on controller 330 and/or client device 340. For example, application 372 may include software associated with parallel processing platform 360 and/or any other software capable of being provided via cloud computing environment 350. In some implementations, one application 372 may send/receive information to/from one or more other applications 372, via virtual machine 374.

Virtual machine 374 includes a software implementation of a machine (e.g., a computer) that executes programs like a physical machine. For example, virtual machine 374 may include a system virtual machine or a process virtual machine. A system virtual machine may provide a complete system platform that supports execution of a complete operating system. A process virtual machine may execute a single program, and may support a single process. In some implementations, virtual machine 374 may execute on behalf of a user (e.g., client device 340), and may manage infrastructure of cloud computing environment 350, such as data management, synchronization, or long-duration data transfers.

Virtualized storage 376 includes one or more storage systems and/or one or more devices that use virtualization techniques within the storage systems or devices of computing resource 370. In some implementations, within the context of a storage system, types of virtualizations may include block virtualization and file virtualization. Block virtualization may refer to abstraction (or separation) of logical storage from physical storage so that the storage system may be accessed without regard to physical storage or heterogeneous structure. The separation may permit administrators of the storage system flexibility in how the administrators manage storage for end users. File virtualization may eliminate dependencies between data accessed at a file level and a location where files are physically stored. This may enable optimization of storage use, server consolidation, and/or performance of non-disruptive file migrations.

Hypervisor 378 provides hardware virtualization techniques that allow multiple operating systems (e.g., "guest operating systems") to execute concurrently on a host computer, such as computing resource 370. Hypervisor 378 may present a virtual operating platform to the guest operating systems, and may manage the execution of the guest operating systems. Multiple instances of a variety of operating systems may share virtualized hardware resources. In some implementations, hypervisor 378 may manage use of one or more computing resources 370. For example, hypervisor 378 may manage parallel processing across multiple computing resources 370.

Management device 380 includes one or more devices capable of managing operation and/or use of computing resource(s) 370. For example, management device 380 may include a server device or a similar type of device. In some implementations, management device 380 may include a particular computing resource 370 (e.g., a hypervisor 378) configured to manage other computing resources 370. Management device 380 may manage parallel processing performed by one or more computing resources 370. In some implementations, controller 330 and management device 380 may be the same device (e.g., may be integrated into a single device). Additionally, or alternatively, any operation described herein as being performed by controller 330 may be performed by management device 380, and vice versa. While management device 380 is shown as being internal to and a part of cloud computing environment 350, management device 380 may be external from cloud computing environment 350, in some implementations.

Network 390 includes one or more wired and/or wireless networks. For example, network 390 may include a cellular network (e.g., a long-term evolution (LTE) network, a third generation (3G) network, a code division multiple access (CDMA) network, etc.), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, or the like, and/or a combination of these or other types of networks.

The number and arrangement of devices and networks shown in Fig. 3 are provided as an example. In practice, there may be additional devices and/or networks, fewer devices and/or networks, different devices and/or networks, or differently arranged devices and/or networks than those shown in Fig. 3. Furthermore, two or more devices shown in Fig. 3 may be implemented within a single device, or a single device shown in Fig. 3 may be implemented as multiple, distributed devices. Additionally, or alternatively, a set of devices (e.g., one or more devices) of environment 300 may perform one or more functions described as being performed by another set of devices of environment 300.

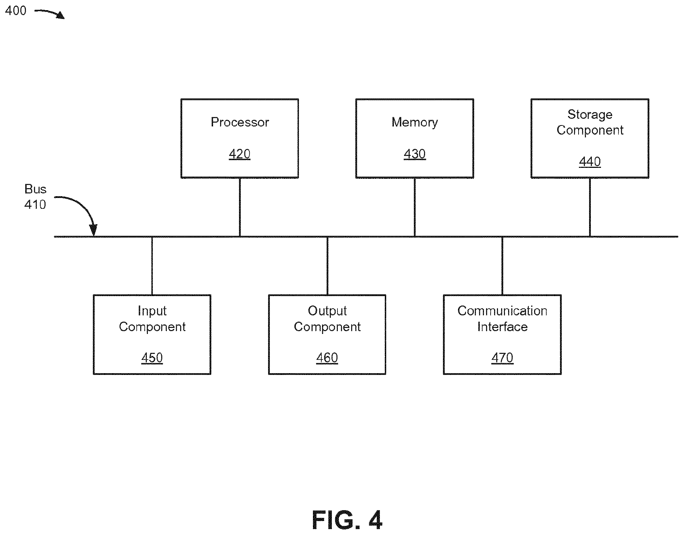

Fig. 4 is a diagram of example components of a device 400. Device 400 may correspond to plant equipment 310, sensor 320, controller 330, client device 340, computing resource 370, and/or management device 380. In some implementations, plant equipment 310, sensor 320, controller 330, client device 340, computing resource 370, and/or management device 380 may include one or more devices 400 and/or one or more components of device 400. As shown in Fig. 4, device 400 may include a bus 410, a processor 420, a memory 430, a storage component 440, an input component 450, an output component 460, and a communication interface 470.

Bus 410 includes a component that permits communication among the components of device 400. Processor 420 is implemented in hardware, firmware, or a combination of hardware and software. Processor 420 includes a processor (e.g., a central processing unit (CPU), a graphics processing unit (GPU), and/or an accelerated processing unit (APU)), a microprocessor, a microcontroller, and/or any processing component (e.g., a field-programmable gate array (FPGA) and/or an application-specific integrated circuit (ASIC)) that interprets and/or executes instructions. In some implementations, processor 420 includes one or more processors capable of being programmed to perform a function. Memory 430 includes a random access memory (RAM), a read only memory (ROM), and/or another type of dynamic or static storage device (e.g., a flash memory, a magnetic memory, and/or an optical memory) that stores information and/or instructions for use by processor 420.

Storage component 440 stores information and/or software related to the operation and use of device 400. For example, storage component 440 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of non-transitory computer-readable medium, along with a corresponding drive.

Input component 450 includes a component that permits device 400 to receive information, such as via user input (e.g., a touch screen display, a keyboard, a keypad, a mouse, a button, a switch, and/or a microphone). Additionally, or alternatively, input component 450 may include a sensor for sensing information (e.g., a global positioning system (GPS) component, an accelerometer, a gyroscope, and/or an actuator). Output component 460 includes a component that provides output information from device 400 (e.g., a display, a speaker, and/or one or more light-emitting diodes (LEDs)).

Communication interface 470 includes a transceiver-like component (e.g., a transceiver and/or a separate receiver and transmitter) that enables device 400 to communicate with other devices, such as via a wired connection, a wireless connection, or a combination of wired and wireless connections. Communication interface 470 may permit device 400 to receive information from another device and/or provide information to another device. For example, communication interface 470 may include an Ethernet interface, an optical interface, a coaxial interface, an infrared interface, a radio frequency (RF) interface, a universal serial bus (USB) interface, a Wi-Fi interface, a cellular network interface, or the like.

Device 400 may perform one or more processes described herein. Device 400 may perform these processes in response to processor 420 executing software instructions stored by a non-transitory computer-readable medium, such as memory 430 and/or storage component 440. A computer-readable medium is defined herein as a non-transitory memory device. A memory device includes memory space within a single physical storage device or memory space spread across multiple physical storage devices.

Software instructions may be read into memory 430 and/or storage component 440 from another computer-readable medium or from another device via communication interface 470. When executed, software instructions stored in memory 430 and/or storage component 440 may cause processor 420 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, device 400 may include additional components, fewer components, different components, or differently arranged components than those shown in Fig. 4. Additionally, or alternatively, a set of components (e.g., one or more components) of device 400 may perform one or more functions described as being performed by another set of components of device 400.

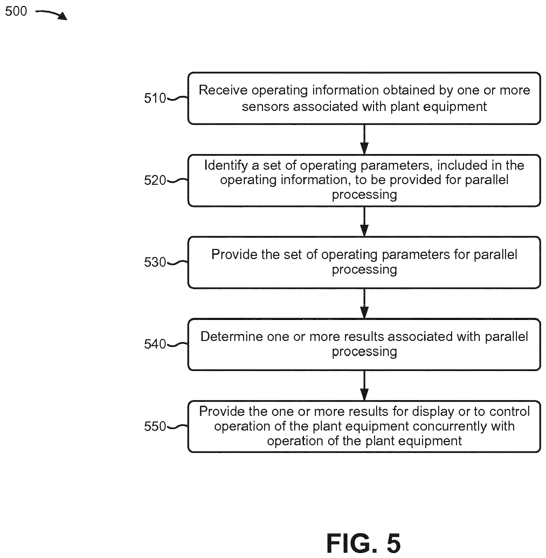

Fig. 5 is a flow chart of an example process 500 for parallel processing of operating information for real time monitoring and control of plant equipment. In some implementations, one or more process blocks of Fig. 5 may be performed by management device 380. In some implementations, one or more process blocks of Fig. 5 may be performed by another device or a group of devices separate from or including management device 380, such as plant equipment 310, sensor 320, controller 330, client device 340, or computing resource 370.

As shown in Fig. 5, process 500 may include receiving operating information obtained by one or more sensors associated with plant equipment (block 510). For example, management device 380 may receive operating information from controller 330. The operating information may be associated with operation of plant equipment 310. For example, the operating information may include measurements of one more operating parameters of plant equipment 310, as measured by sensor 320. Sensor 320 may provide the operating information to controller 330, which may in turn provide the operating information to management device 380.

As described herein, an operating parameter may include a measurement of position (e.g., geographic coordinates), velocity, speed (e.g., linear speed, rotational speed, etc.), acceleration (e.g., linear acceleration, rotational acceleration, etc.), temperature, pressure, fluid flow, power consumption, power production, voltage, current, resistance, operating status (e.g., availability), or the like. Sensor 320 may measure one or more operating parameters during the operation of plant equipment 310.

In some implementations, management device 380 may receive operating information periodically from controller 330 (e.g., at a preconfigured time interval). Additionally, or alternatively, management device 380 may receive operating information as measurements are taken by sensors 320. Additionally, or alternatively, management device 380 may receive operating information based on user input (e.g., input via client device 340), which may include an instruction to analyze operating information. In some implementations, the operating information may be received directly from plant equipment 310 and/or sensors 320 without involvement of controller 330.

As further shown in Fig. 5, process 500 may include identifying a set of operating parameters, included in the operating information, to be provided for parallel processing (block 520), and providing the set of operating parameters for parallel processing (block 530). For example, management device 380 may manage parallel processing of the operating information. As described herein, parallel processing may include processing that occurs concurrently between controller 330 and one or more computing resources 370 (e.g., virtual machines, processors, etc.). Additionally, or alternatively, parallel processing may include processing that occurs concurrently between multiple different computing resources 370. Additionally, or alternatively, parallel processing may include processing that occurs concurrently between multiple different processors of one or more computing resources 370. In some implementations, computing resources 370 and/or controller 330 may process the operating parameters by executing an application that applies an analysis technique for analyzing the operating parameters. For example, computing resources 370 and/or controller 330 may process the operating parameters through a predictive modeling application, an optimization or improvement application, a solver, or the like. Execution of the application may be computationally complex.

As an example, a Fast Fourier Transform (FFT) operation may be performed on the operating parameters. For example, management device 380 may receive raw data from plant equipment 310, such as a combustion system. The raw data may be difficult to interpret to monitor and/or control the combustion system. Management device 380 may provide the raw data to controller 330 and/or computing resources 370 for parallel processing to perform the FFT operation. By performing the FFT operation, the raw data may be converted to processed data that is more easily interpreted to monitor and/or control the combustion system. Further, by utilizing parallel processing to perform the FFT operation, the raw data may be quickly converted to usable format for real-time monitoring or control of plant equipment 310.

In some implementations, the application may be executed based on one or more inputs (e.g., operating parameters) to provide one or more outputs (e.g., results). In some implementations, the set of operating parameters may be a subset of the operating information received from controller 330. Management device 380 may store information regarding particular operating parameters to be provided as input to particular computing resources 370 and/or to controller 330. Management device 380 may provide the operating parameters to appropriate computing resources 370 and/or controller 330 based on the stored information.

In some implementations, different computing resources 370 and/or controller 330 may execute different applications (associated with different models, simulations, solvers, etc.). Further, different computing resources 370 and/or controller 330 may receive different sets of inputs and/or operating parameters from management device 380. For example, management device 380 may provide a first set of operating parameters to a first computing resource 370, and may provide a second set of operating parameters to a second computing resource 370. As another example, management device 380 may provide a first set of operating parameters to controller 330, and may provide a second set of operating parameters to computing resource 370.

For example, management device 380 may provide operating parameters regarding thermocouples to a first set of computing resources 370, which may execute a predictive model to determine or predict failures of the thermocouples. If a thermocouple fails or is predicted to fail, management device 380 may provide instructions or an indication to jumper a thermocouple to prevent shutdown of plant equipment 310. However, jumping too many thermocouples may result in an unsafe condition. Thus, management device 380 may provide, to a second set of computing resources 370, operating parameters to monitor for the unsafe condition. Furthermore, management device 380 may provide, to a third set of computing resources 370, operating parameters to monitor for anomalies in an exhaust temperature profile by monitoring the thermocouples. In this way, overlapping or separate inputs may be used by different applications or models executing in parallel.

In some implementations, management device 380 may determine a state of plant equipment 310, and may use the state to determine a manner in which parallel processing is to be performed and/or to prioritize parallel processing. A state of plant equipment 310 may refer to a mode of operation of plant equipment 310, such as whether plant equipment 310 is operating in a normal state (e.g., when one or more operating parameters are within a threshold range for normal operation), whether plant equipment 310 is operating in an abnormal state (e.g., when one or more operating parameters are outside a threshold range for normal operation), whether plant equipment 310 is operating in a steady state (e.g., when one or more operating parameters are changing by less than a threshold amount within a particular time period), whether plant equipment 310 is operating in a transient state (e.g., when one or more operating parameters are changing by more than a threshold amount within a particular time period), or the like. In some implementations, the threshold(s) for determining a state of plant equipment 310 may be sensor-specific and/or operating parameter-specific. For example, management device 380 may store different thresholds for different types of sensor and/or different types of operating parameters.

In some implementations, management device 380 may prioritize parallel processing by providing operating parameters for parallel processing less often or using fewer computing resources 370 when plant equipment 310 is operating in the normal state or the steady state, and by providing operating parameters for parallel processing more often or using more computer resources 370 when plant equipment 310 is operating in the abnormal state or the transient state. In this way, monitoring and/or control of plant equipment 310 may be performed more quickly when plant equipment 310 is potentially experiencing issues (e.g., is in the abnormal state or the transient state).

In some implementations, management device 380 may prioritize parallel processing. The prioritization may be used to determine how often parallel processing is performed (e.g., by sending operating parameters to computing resources 370 more frequently or less frequently), a quantity of computing resources 370 to be used for parallel processing, an order in which parallel processing is to occur, or the like. In some implementations, management device 380 may receive user input that indicates the prioritization. For example, the user input may indicate how often to perform parallel processing and/or how many computing resources 370 to use to perform parallel processing for different types of operating information, plant equipment 310, sensors 320, or the like.

For example, a user may provide input to prioritize (e.g., perform parallel processing more often or using a greater quantity of computing resources 370) a first analysis technique as compared to a second analysis technique, to prioritize parallel processing for a first type of plant equipment 310 as compared to a second type of plant equipment 310, to prioritize parallel processing for a first type of sensor 320 as compared to a second type of sensor 320, to prioritize parallel processing for a first set of operating parameters as compared to a second set of operating parameters, or the like. In some implementations, the user input may specific a particular quantity of computing resources 370 to be used for parallel processing or a particular time interval for sending operating parameters for parallel processing. In some implementations, the user input may specify a priority order for parallel processing, and management device 380 may determine the quantity of computing resources 370 and/or the time interval based on the priority order.

In some implementations, management device 380 may prioritize parallel processing based on available computing resources 370 (e.g., available computing power, available memory resources, etc.). Additionally, or alternatively, management device 380 may prioritize parallel processing based on an execution time associated with an analysis technique (e.g., shorter execution times may be prioritized over longer execution times or longer execution times may be prioritized over shorter execution times). Additionally, or alternatively, management device 380 may prioritize parallel processing based on a quantity of pieces of plant equipment 310 being monitored or controlled. Additionally, or alternatively, management device 380 may prioritize plant equipment 310 based on a criticality of plant equipment 310 to operation of a plant. Additionally, or alternatively, management device 380 may prioritize operating information from sensor(s) 320 based on a type of sensor 320, a criticality of information obtained from sensor 320, or the like. In some implementations, a user may provide input to indicate the criticality of plant equipment 310 and/or sensor 320. Additionally, or alternatively, management device 380 may store indicators for a default criticality of plant equipment 310, may perform machine learning to determine a criticality of plant equipment 310, or the like. In some implementations, management device 380 may prioritize parallel processing based on multiple of these factors.

In some implementations, a particular computing resource 370 may be dedicated to performing a particular analysis technique, may be dedicated to performing processing for a particular piece of plant equipment 310, or the like. In this way, critical pieces of plant equipment 310 can be assigned to one or more computing resource 370 to ensure that processing resources are available for those critical pieces of plant equipment 310.

In some implementations, management device 380 may distribute the operating parameters for parallel processing in a way such that processing of the operating parameters may be completed in a relatively short amount of time. Also, management device 380 may distribute the operating parameters in a way such that parallel processing of the operating parameters may be completed in a relatively synchronized manner. For example, management device 380 may provide the operating parameters to computing resources 370 and/or controller 330 such that operating parameters involved in relatively high-intensive analyses are balanced with operating parameters involved in relatively low-intensive analyses such that the results of the analyses are produced in a synchronized fashion. For example, the results may be generated within a threshold amount of time of one another.

As further shown in Fig. 5, process 500 may include determining one or more results associated with parallel processing (block 540). For example, computing resource(s) 370 may execute an application and may provide a result to management device 380. Additionally, or alternatively, controller 330 may execute an application and may provide a result to management device 380. A result may refer to an output of executing an application on operating parameters provided as input to controller 330 and/or computing resource 370.

In some implementations, management device 380 may receive multiple results from multiple different computing resources 370 (executing different applications, models, simulations, etc.). In some implementations, parallel processing of operating parameters may occur while plant equipment 310 is operating, such that results are obtained in real time. For example, parallel processing may occur such that results are obtained within a threshold amount of time after operating parameters are measured by sensors 320, so as to allow for real time dynamic control and monitoring of plant equipment 310.

As an example, a result may include a prediction of an operating parameter value (e.g., temperature, pressure, etc.) during a future time period or point in time. As another example, a result may include information regarding an impact of one or more operating parameters on future performance of plant equipment 310. As another example, a result may include a prediction and/or determination that indicates whether and/or when plant equipment 310 should undergo maintenance. As another example, a result may include information identifying changes to operating parameters that would result in better performance of plant equipment 310, a longer time period before maintenance periods of plant equipment 310, an improved efficiency of plant equipment 310, or the like

As further shown in Fig. 5, process 500 may include providing the one or more results for display or to control operation of the plant equipment concurrently with operation of the plant equipment (block 550). For example, management device 380 may provide the results to controller 330 and/or client device 340. In some implementations, the results may be provided for display on client device 340 (e.g., as a graph, a chart, or the like). In this way, a plant operator may be provided with substantially real time operating information of plant equipment 310, and may be alerted as to potential issues or improvements. Additionally, or alternatively, the results may include a recommendation, and may aid an operator in an analysis regarding the operation of plant equipment 310. Further, based on the results, the operator may provide input to implement the recommendation. For example, the operator may use client device 340 to send an instruction to controller 330 to modify the operation of plant equipment 310 based on the recommendation. Additionally, or alternatively, the results may be provided directly to controller 330 for implementation. For example, controller 330 may use the results to control operation of plant equipment 310 (e.g., by modifying an operating parameter and/or controlling an actuator of plant equipment 310). Additionally, or alternatively, controller 330 may provide results, received from management device 380, to client device 340.

In some implementations, the results may include a recommendation and/or an instruction to be implemented by controller 330, and controller 330 may implement the recommendation and/or instruction. In this way, management device 380 and/or controller 330 may modify operation of plant equipment 310 substantially in real time (e.g., within a threshold amount of time from when operating parameters are measured by sensors 320 and/or received by management device 380). In some implementations, management device 380 may determine whether results are relevant, and may provide relevant results while filtering out non-relevant results. In some implementations, management device 380 may determine relevant and/or non-relevant results based on user input (e.g., provided via client device 340). For example, management device 380 may provide results relating to plant performance and/or safety, such as trends in operating temperature, pressure, efficiency, maintenance intervals, and/or operating life of plant equipment 310. In this way, management device 380 may assist in effective, real time control and monitoring of plant equipment 310, thereby improving plant performance.

Although Fig. 5 shows example blocks of process 500, in some implementations, process 500 may include additional blocks, fewer blocks, different blocks, or differently arranged blocks than those depicted in Fig. 5. Additionally, or alternatively, two or more of the blocks of process 500 may be performed in parallel.

As described herein, parallel processing techniques (e.g., within a cloud-based analytics system) may be used to perform complex analysis of operating information in order to monitor and/or control operation of plant equipment in real time. For example, operating information may be divided across computing resources in a cloud environment for parallel processing. The computing resources and/or a controller may analyze the operating information in parallel such that results of the analysis are produced faster in relation to when the operating information is analyzed serially. Further, the results may be generated in a synchronized manner. As described herein, the results of the analysis may be used to monitor and/or control operation of plant equipment in real time, leading to faster discovery of operating issues, improved performance, etc.

The foregoing disclosure provides illustration and description, but is not intended to be exhaustive or to limit the implementations to the precise form disclosed. Modifications and variations are possible in light of the above disclosure or may be acquired from practice of the implementations.

As used herein, the term component is intended to be broadly construed as hardware, firmware, and/or a combination of hardware and software.

Some implementations are described herein in connection with thresholds. As used herein, satisfying a threshold may refer to a value being greater than the threshold, more than the threshold, higher than the threshold, greater than or equal to the threshold, less than the threshold, fewer than the threshold, lower than the threshold, less than or equal to the threshold, equal to the threshold, etc.

Even though particular combinations of features are recited in the claims and/or disclosed in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Furthermore, as used herein, the term "set" is intended to include one or more items (e.g., related items, unrelated items, a combination of related items, and unrelated items, etc.), and may be used interchangeably with "one or more." Where only one item is intended, the term "one" or similar language is used. Also, as used herein, the terms "has," "have," "having," or the like are intended to be open-ended terms. Further, the phrase "based on" is intended to mean "based, at least in part, on" unless explicitly stated otherwise.

Various aspects and embodiments of the present invention are defined by the following clauses:
1. A method, comprising:
   receiving, by a first device and from one or more sensors associated with plant equipment, operating information associated with operation of the plant equipment;
   prioritizing, by the first device, the operating information for parallel processing based on at least one of:
      one or more analysis techniques to be performed via the parallel processing,
      one or more pieces of plant equipment with which the operating information is associated,
      one or more states associated with the one or more pieces of plant equipment, or
      one or more operating parameters included in the operating information;
      providing, by the first device and based on prioritizing the operating information, the operating information to one or more second devices for parallel processing of the operating information during operation of the plant equipment;
      receiving, by the first device, one or more results associated with parallel processing of the operating information; and
      using, by the first device, the one or more results to provide information, associated with operation of the plant, for display or to control operation of the plant equipment.
2. The method of clause 1, where the one or more results are received substantially in real time relative to receiving the operating information.
3. The method of clause 1, further comprising:
   processing, by the first device, at least a portion of the operating information in parallel with the parallel processing of the operating information by the one or more second devices;
   determining one or more other results based on processing the at least the portion of the operating information; and
   where using the one or more results comprises:
      using the one or more other results to provide the information, associated with operation of the plant, for display or to control operation of the plant equipment.
4. The method of clause 1, further comprising:
   providing the one or more results for display substantially in real time relative to receiving the operating information.
5. The method of clause 1, further comprising:
   controlling the plant equipment, based on the one or more results, substantially in real time relative to receiving the operating information.
6. The method of clause 1, where prioritizing the operating information comprises:
   prioritizing the operating information based on the one or more states of the plant equipment,
   where the one or more states include:
      a normal state,
      an abnormal state,
      a steady state, or
      a transient state.
7. The method of clause 1, further comprising:
   determining, based on prioritizing the operating information, at least one of:
      a quantity of computing resources to be used to perform the parallel processing,
      a frequency with which to perform the parallel processing, or
      an order in which to perform the parallel processing; and
      where providing the operating information for parallel processing comprises:
         providing the operating information based on the quantity, the frequency, or the order.
8. A system, comprising:
   one or more processors configured to:
      receive operating information obtained by one or more sensors associated with plant equipment,
      the operating information identifying one or more operating parameters associated with operation of the plant equipment;
      identify one or more portions of the operating information to be provided for parallel processing;
      prioritize the one or more portions of the operating information for parallel processing based on at least one of:
         a criticality of the plant equipment, or
         a state of the plant equipment;
         provide the one or more portions of the operating information for parallel processing based on prioritizing the one or more portions of the operating information for parallel processing;
         determine one or more results associated with parallel processing of the one or more portions of the operation information; and
         provide the one or more results for display or to control operation of the plant equipment concurrently with operation of the plant equipment.
9. The system of clause 8, where the one or more processors, when providing the one or more results, are configured to:
   provide the one or more results to a controller configured to control operation of the plant equipment.
10. The system of clause 8, where the one or more results are determined based on a plurality of predictive models executed in parallel.
11. The system of clause 8, where the one or more processors, when identifying the one or more portions of the operating information to be provided for parallel processing, are configured to:
   determine a first analysis technique, to be executed by a first device, based on the plant equipment, the criticality of the plant equipment, or the state of the plant equipment;
   determine one or more first inputs for the first analysis technique,
   the one or more first inputs being a subset of the operating information;
   determine a second analysis technique, to be executed by a second device that is different from the first device, based on the plant equipment, the criticality of the plant equipment, or the state of the plant equipment; and
   determine one or more second inputs for the second analysis technique,
   the one or more second inputs being a subset of the operating information; and
   where the one or more processors, when providing the one or more portions of the operating information for parallel processing, are configured to:
      provide the one or more first inputs to the first device; and
      provide the one or more second inputs to the second device.
12. The system of clause 8, where the one or more processors, when providing the one or more portions of the operating information for parallel processing, are configured to:
   provide a first portion of the operating information to a controller configured to control operation of the plant equipment; and
   provide a second portion of the operating information to a computing resource of a cloud computing environment,
   the second portion being different from the first portion.
13. The system of clause 8, where the one or more processors, when providing the one or more portions of the operating information for parallel processing, are configured to:
   provide a first portion of the operating information to a first computing resource of a cloud computing environment; and
   provide a second portion of the operating information to a second computing resource of the cloud computing environment,
   the second portion being different from the first portion.
14. The system of clause 8, where the one or more processors, when providing the one or more results, are configured to:
   provide the one or more results to a controller via a communication link dedicated to communications with the controller.
15. A non-transitory computer-readable medium storing instructions, the instructions comprising:
   one or more instructions that, when executed by one or more processors, cause the one or more processors to:
      receive, from a controller configured to control plant equipment, operating information obtained via one or more sensors that monitor the plant equipment,
      the operating information being obtained via the one or more sensors and during operation of the plant equipment;
      identify one or more portions of the operating information to be provided for parallel processing;
      prioritize the one or more portions of the operating information for parallel processing based on at least one of:
         the plant equipment,
         a criticality of the plant equipment,
         a state of the plant equipment, or
         the one or more sensors from which the operating information is received;
         provide the one or more portions of the operating information for parallel processing based on prioritizing the one or more portions of the operating information;
         determine one or more results associated with an analysis of the operating information based on providing the one or more portions of the operating information for parallel processing; and
         provide information regarding the one or more results for display or to control operation of the plant equipment.
16. The non-transitory computer-readable medium of clause 15, where the one or more instructions, that cause the one or more processors to provide the information regarding the one or more results, cause the one or more processors to:
   provide the information regarding the one or more results to the controller to control operation of the plant equipment substantially in real time relative to receiving the operating information from the controller.
17. The non-transitory computer-readable medium of clause 15, where the one or more portions of the operating information include a plurality of portions of the operating information;
   where the one or more results include a plurality of results; and
   where the plurality of results are determined based on executing different applications, based on the plurality of portions of the operating information, in parallel.
18. The non-transitory computer-readable medium of clause 15, where the one or more instructions, that cause the one or more processors to prioritize the one or more portions of the operating information for parallel processing, cause the one or more processors to:
   determine the criticality of the plant equipment in relation to operation of a plant; and
   prioritize the one or more portions of the operating information based on the criticality of the plant equipment.
19. The non-transitory computer-readable medium of clause 15, where the one or more instructions, that cause the one or more processors to prioritize the one or more portions of the operating information for parallel processing, cause the one or more processors to:
   determine one or more thresholds associated with the plant equipment or the one or more sensors;
   compare the operating information to the one or more thresholds;
   determine the state of the plant equipment based on comparing the operating information to the one or more thresholds; and
   prioritize the one or more portions of the operating information based on the state of the plant equipment.
20. The non-transitory computer-readable medium of clause 15, where the one or more instructions, that cause the one or more processors to identify the one or more portions of the operating information to be provided for parallel processing, cause the one or more processors to:
   determine a first application, to be executed by a first device, based on the plant equipment, the criticality of the plant equipment, the state of the plant equipment, or the one or more sensors;
   determine a first input for the first application,
      the first input being a subset of the operating information;
   determine a second application, to be executed by a second device that is different from the first device, based on the plant equipment, the criticality of the plant equipment, the state of the plant equipment, or the one or more sensors; and
   determine a second input for the second application,
   the second input being a subset of the operating information and being different from the first input; and
   where the one or more instructions, that cause the one or more processors to provide the one or more portions of the operating information for parallel processing, cause the one or more processors to:
      provide the first input to the first device; and
      provide the second input to the second device.

## Claims

1. A method (500), comprising:
receiving (510), by a device (330, 380) and from one or more sensors (320) associated with equipment (310) used in a plant, operating information associated with operation of the equipment (310);
providing (520), by the device (330, 380), the operating information to one or more devices for parallel processing (530) of the operating information during operation of the equipment (310);
receiving (540), by the device (330, 380), one or more results associated with parallel processing of the operating information; and
using (550), by the device (330, 380), the one or more results to provide information, associated with operation of the plant, for display or to control operation of the equipment (310).

2. The method (500) of claim 1, where the one or more results are received substantially in real time relative to receiving the operating information.

3. The method (500) of claim 1, further comprising:
processing (530), by the device (330, 380), at least a portion of the operating information in parallel with the parallel processing of the operating information by the one or more devices (330, 380);
determining (540) one or more other results based on processing the at least the portion of the operating information; and
where using (550) the one or more results comprises:
using the one or more results and the one or more other results to provide the information, associated with operation of the plant, for display or to control operation of the equipment (310).

4. The method (500) of claim 1, further comprising:
controlling the equipment (310), based on the one or more results, substantially in real time relative to receiving the operating information.

5. The method (500) of claim 1, further comprising:
determining (540), based on prioritizing the operating information, at least one of:
a quantity of computing resources to be used to perform the parallel processing,
a frequency with which to perform the parallel processing, or
an order in which to perform the parallel processing; and
where providing (530) the operating information for parallel processing comprises:
providing the operating information based on the quantity, the frequency, or the order.

6. A system (100, 200, 400), comprising:
one or more processors (210, 420) configured to:
receive operating information obtained by one or more sensors (320) associated with plant equipment (310),
the operating information identifying one or more operating parameters associated with operation of the plant equipment (310);
identify one or more portions of the operating information to be provided for parallel processing;
provide the one or more portions of the operating information for parallel processing;
determine one or more results associated with parallel processing of the one or more portions of the operation information; and
provide the one or more results for display or to control operation of the plant equipment (310) concurrently with operation of the plant equipment (310).

7. The system (100, 200, 400) of claim 6, where the one or more processors (210, 420), when providing the one or more results, are configured to:
provide the one or more results to a controller (330) configured to control operation of the plant equipment (310).

8. The system (100, 200, 400) of claim 6, where the one or more results are determined based on a plurality of predictive models executed in parallel.

9. The system (100, 200, 400) of claim 6, where the one or more processors (210, 420), when identifying the one or more portions of the operating information to be provided for parallel processing, are configured to:
determine a first analysis technique to be executed by a first device;
determine one or more first inputs for the first analysis technique,
the one or more first inputs being a subset of the operating information;
determine a second analysis technique to be executed by a second device that is different from the first device; and
determine one or more second inputs for the second analysis technique,
the one or more second inputs being a subset of the operating information; and
where the one or more processors (210, 420), when providing the one or more portions of the operating information for parallel processing, are configured to:
provide the one or more first inputs to the first device; and
provide the one or more second inputs to the second device.

10. The system (100, 200, 400) of claim 6, where the one or more processors (210, 420), when providing the one or more portions of the operating information for parallel processing, are configured to:
provide a first portion of the operating information to a controller (330) configured to control operation of the plant equipment (310); and
provide a second portion of the operating information to a computing resource (370) of a cloud computing environment (350),
the second portion being different from the first portion.

11. The system (100, 200, 400) of claim 9, where the one or more processors (210, 420), when providing the one or more portions of the operating information for parallel processing, are configured to:
provide a first portion of the operating information to a first computing resource (370) of a cloud computing environment (350); and
provide a second portion of the operating information to a second computing resource (370) of the cloud computing environment (350),
the second portion being different from the first portion.

12. A non-transitory computer-readable medium (430) storing instructions, the instructions comprising:
one or more instructions that, when executed by one or more processors (420), cause the one or more processors (420) to:
receive, from a controller (330) configured to control plant equipment (310), operating information obtained via one or more sensors (320) that monitor the plant equipment (310),
the operating information being obtained via the one or more sensors (320) and
during operation of the plant equipment (310);
identify one or more portions of the operating information to be provided for parallel processing;
prioritize the one or more portions of the operating information for parallel processing based on at least one of:
the plant equipment (310),
a criticality of the plant equipment (310),
a state of the plant equipment (310), or
the one or more sensors (320) from which the operating information is received;
provide the one or more portions of the operating information for parallel processing based on prioritizing the one or more portions of the operating information;
determine one or more results associated with an analysis of the operating information based on providing the one or more portions of the operating information for parallel processing; and
provide information regarding the one or more results for display or to control operation of the plant equipment (310).

13. The non-transitory computer-readable medium (430) of claim 12, where the one or more instructions, that cause the one or more processors (420) to provide the information regarding the one or more results, cause the one or more processors (420) to:
provide the information regarding the one or more results to the controller (330) to control operation of the plant equipment (310) substantially in real time relative to receiving the operating information from the controller (330).

14. The non-transitory computer-readable medium (430) of claim 12, where the one or more portions of the operating information include a plurality of portions of the operating information;
where the one or more results include a plurality of results; and
where the plurality of results are determined based on executing different applications, based on the plurality of portions of the operating information, in parallel.

15. The non-transitory computer-readable medium (430) of claim 12, where the one or more instructions, that cause the one or more processors (420) to prioritize the one or more portions of the operating information for parallel processing, cause the one or more processors (420) to:
determine the criticality of the plant equipment (310) in relation to operation of a plant; and
prioritize the one or more portions of the operating information based on the criticality of the plant equipment (310).
